# EUROPÄISCHE PATENTANMELDUNG

(11) **EP 1 561 536 A1**
(43) Veröffentlichungstag der Anmeldung: **10.08.2005**
(21) Anmeldenummer: 04002332.7
(22) Anmeldetag: 03.02.2004
(51) Int. Cl.: B23K 1/00, B23K 1/002, B23K 1/005, F01D 5/00, B23P 6/00

(54) **Reparatur-Lotverfahren zum Reparieren eines Bauteils, welches ein Basismaterial mit einer gerichteten Mikrostruktur umfasst**

(71) Anmelder: SIEMENS AKTIENGESELLSCHAFT, 80333 München (DE)
(72) Erfinder: Ott, Michael, Dr., 45478 Mülheim (DE); Paul, Uwe, Dr., 40882 Ratingen (DE)

(57) **Zusammenfassung**

In einem erfindungsgemäßen Reparaturverfahren zum Reparieren von ein Basismaterial mit einer gerichteten Mikrostruktur umfassenden Bauteilen (1) erfolgt die Reparatur derart, dass die reparierte Stelle (3) dieselbe gerichtete Mikrostruktur wie das umgebende Basismaterial aufweist. Im erfindungsgemäßen Verfahren wird ein Lot (7) im Bereich einer zu reparierenden Stelle (3) aufgebracht und mittels Wärmeeinwirkung mit dem Bauteil (1) verlötet. Während der Wärmeeinwirkung wird dabei ein Temperaturgradient, d.h. etwa ein Temperaturverlauf von einer höheren zu einer niedrigeren Temperatur, im Bereich der zu reparierenden Stelle (3) erzeugt.

## Beschreibung

Die vorliegende Erfindung betrifft ein Reparaturverfahren zum Reparieren eines Bauteils, welches ein Basismaterial mit einer gerichteten Mikrostruktur umfasst, sowie ein Bauteil mit einem Basismaterial, welches eine gerichtete Mikrostruktur aufweist und einer Lötstelle, an der ein Lot mit dem Basismaterial verlötet ist.

Beispielsweise Bauteile von Turbinen sind heutzutage nicht selten aus Materialien mit einer gerichteten Mikrostruktur hergestellt. Als Materialien mit einer gerichteten Mikrostruktur sollen hierbei insbesondere einkristalline Materialien und Materialien, die eine Kornstruktur aufweisen, wobei die Ausdehnung der Körner eine gemeinsame Vorzugsrichtung aufweist, anzusehen sein. Z.B. können die Körner in einer bestimmten Vorzugsrichtung eine größere Abmessung aufweisen, als in den übrigen Richtungen. Bauteile mit einer derartigen Kornstruktur werden auch als direktional erstarrte Bauteile (directional solidified) bezeichnet.

Stark belastete Bauteile, wie etwa Turbinenschaufeln, unterliegen während des Betriebs einer hohen thermischen und mechanischen Beanspruchung, die zu Materialermüdungen und infolgedessen zu Rissen führen kann. Da das Herstellen von Bauteilen aus Basismaterialien, welche eine gerichtete Mikrostruktur aufweisen, relativ kostspielig ist, ist man in der Regel bemüht, derartige Bauteile zu reparieren. Damit wird die Funktionstüchtigkeit wieder hergestellt und das Bauteil für eine weitere Revisionsperiode einsetzbar.

Eine Möglichkeit der Reparatur beschädigter Bauteile ist beispielsweise das Löten. Bei diesem Löten wird ein Lot im Bereich der Beschädigung auf das Material des Bauteils, also auf das Basismaterial, aufgebracht und mittels Wärmeeinwirkung mit dem Basismaterial verbunden. Nach dem Löten weist das Lotmaterial jedoch keine einkristalline oder direktional erstarrte Struktur auf. Eine derartige ungeordnete Struktur besitzt jedoch im Vergleich zu einer gerichteten Mikrostruktur schlechtere Materialeigenschaften - vor allem im Hochtemperaturbereich -, sodass die Lötstelle schlechtere Materialeigenschaften als das umgebende Basismaterial aufweist.

Zum Reparieren von beschädigten Bauteilen mit einer gerichteten Mikrostruktur stehen Schweißverfahren zur Verfügung, mit denen auch gerichtete Mikrostrukturen in den verschweißten Strukturen erzeugt werden können. Ein derartiges Verfahren ist beispielsweise in EP 089 090 A1 offenbart.

Weitere Verfahren bzw. zu verwendende Lotpulver sind bekannt aus der US 6,283,356, US 4,705,203, US 4,900,394, US 6,565,678, US 4,830,934, US 4,878,953, US 5,666,643, US 6,454,885, US 6,503,349, US 5,523,170, US 4,878,953, US 4,987,736, US 5,806,751, US 5,783,318, US 5,873,703.

Schweißverfahren schmelzen jedoch das Basismaterial des zu reparierenden Bauteils auf. Strukturell tragende Bereiche eines Bauteils können daher nicht geschweißt werden, da aufgrund des Aufschmelzens des Basismaterials die Integrität der gerichteten Struktur verloren ginge. Deshalb werden Bauteile mit einer gerichteten Mikrostruktur nur dann mittels der Schweißverfahren repariert, wenn sich die Beschädigungen nicht in strukturell tragenden Bereichen des Bauteils befinden. Befindet sich dagegen eine Beschädigung in einem strukturell tragenden Bereich eines Bauteils aus einem Basismaterial mit einer gerichteten Mikrostruktur, so wird, falls eine gerichtete Schweißstruktur verlangt wird, dieses Bauteil als nicht reparierbar deklariert und gegen ein intaktes Bauteil ausgetauscht.

Aufgabe der Erfindung ist es daher, ein Reparaturverfahren zur Verfügung zu stellen, mit dem beschädigte Bauteile, welche ein Basismaterial mit einer gerichteten Mikrostruktur umfassen, auch dann repariert werden können, wenn sich die Beschädigung in einem strukturell tragenden Bereich des Bauteils befindet.

Es ist eine weitere Aufgabe der vorliegenden Erfindung, ein Bauteil mit einem Basismaterial, welches eine gerichtete Mikrostruktur aufweist, und einer Reparaturstelle in einem strukturell tragenden Bereich des Bauteils zur Verfügung zu stellen, bei dem das Material der Reparaturstelle gegenüber konventionellen Bauteilen mit einer in einem strukturell tragenden Bereich vorhandenen Reparaturstelle des Bauteils verbesserte Materialeigenschaften aufweist.

Die erste Aufgabe wird durch ein Reparaturverfahren nach Anspruch 1, die zweite Aufgabe durch ein Bauteil nach Anspruch 9 gelöst. Die abhängigen Ansprüche enthalten vorteilhafte Ausgestaltungen der vorliegenden Erfindung.

In einem erfindungsgemäßen Reparaturverfahren zum Reparieren eines Bauteils, welches ein Basismaterial mit einer gerichteten Mikrostruktur umfasst, erfolgt die Reparatur derart, dass die reparierte Stelle dieselbe gerichtete Mikrostruktur wie das umgebende Basismaterial aufweist. Das Basismaterial kann dabei insbesondere ein Material auf Nickelbasis sein. Im erfindungsgemäßen Verfahren wird ein Lot im Bereich einer zu reparierenden Stelle aufgebracht und mittels Wärmeeinwirkung mit dem Bauteil verlötet. Während der Wärmeeinwirkung wird dabei ein Temperaturgradient, d.h. etwa ein Temperaturverlauf von einer höheren zu einer niedrigeren Temperatur, im Bereich der zu reparierenden Stelle erzeugt.

Beim Lötprozess wird das Lot, nicht aber das Basismaterial, aufgeschmolzen und wieder erstarrten gelassen, wobei das Lot eine Verbindung mit dem Basismaterial eingeht, so dass das erfindungemäße Reparaturverfahren auch in strukturell tragenden Bereichen des Bauteils zur Anwendung kommen kann. Mittels des Temperaturgradienten lässt sich ein epitaktisches Anwachsen und Erstarren des Lotes erzielen, also ein Wachstum, in welchem die kristalline Orientierung des Lots beim Erstarren von der des Substrates, also des Basismaterials, bestimmt wird. Der Temperaturgradient ermöglicht daher das Entstehen eines einkristallinen Lotbereiches oder einer anderen gerichteten Mikrostruktur im verlöteten Lot mit ähnlich guten Werkstoffeigenschaften. Das gerichtete Wachstum erfolgt dabei in Richtung des Temperaturgradienten, also beispielsweise in Richtung von der höheren zu der niedrigeren Temperatur. Aufgrund des gerichteten Wachstums und der daraus resultierenden gerichteten Mikrostruktur weist das verlötete Lot ähnlich gute Materialeigenschaften wie das Basismaterial des Bauteils auf.

Vorzugsweise wird der Temperaturgradient im erfindungsgemäßen Reparaturverfahren derart erzeugt, dass er in Richtung der Orientierung der gerichteten Mikrostruktur des Basismaterials des Bauteils verläuft. Auf diese Weise lässt sich ein gerichtetes Wachstum des sich verfestigenden Lots in Richtung der Orientierung der gerichteten Mikrostruktur des Basismaterials erreichen.

In einer vorteilhaften Weiterbildung des erfindungsgemäßen Reparaturverfahrens weist das Lot einen ersten Bestandteil mit einer Schmelztemperatur, die niedriger ist, vorzugsweise deutlich niedriger, als die Schmelztemperatur des Basismaterials des Bauteils und einen zweiten Bestandteil mit einer hohen Festigkeit und einer Schmelztemperatur, die über der Schmelztemperatur des ersten Bestandteils aber unterhalb der Schmelztemperatur bis hin zur Schmelztemperatur des Basismaterials liegt, auf. Das Lot wird in dieser Weiterbildung des Verfahrens derart im Bereich der zu lötenden Stelle aufgebracht, dass der Anteil an erstem Bestandteil im Lot in der örtlichen Nähe des Basismaterials höher ist als in einem vom Basismaterial weiter entfernten Bereich. In dieser Ausgestaltung des Verfahrens dient der erste Bestandteil mit der niedrigen Schmelztemperatur dazu, die Verbindung des Lots mit dem Basismaterial herzustellen, während der Bestandteil mit der hohen Schmelztemperatur für die Widerstandsfähigkeit (Festigkeit)des verlöteten Lots sorgt. Dadurch, dass das Lot im Bereich des Basismaterials einen höheren Anteil des ersten Bestandteils umfasst, lässt sich eine gute Verbindung des verlöteten Lots mit dem Basismaterial herstellen. Andererseits ist in Bereichen, die eine größere Entfernung vom Basismaterial aufweisen, verhältnismäßig mehr an zweitem Bestandteil, also am Bestandteil mit der höheren Widerstandsfähigkeit, vorhanden, sodass die beim späteren Betrieb des Bauteils einer stärkeren Belastung ausgesetzten Bereiche der Lötstelle eine hohe Widerstandsfähigkeit aufweisen.

Zum Bereitstellen der Wärmeeinwirkung können im erfindungsgemäßen Verfahren alle Heizvorgänge Verwendung finden, die in der Lage sind, einen Temperaturgradienten im Bereich einer zu lötenden Stelle, d.h. im Lot, herzustellen. Beispielsweise können optische Heizvorgänge, etwa mittels Laser oder konventionellen Beleuchtungsvorrichtungen, oder induktive Heizvorgänge, etwa mittels Heizspulen, zur Anwendung kommen. Alternativ kann auch ein Gießofen zum Gießen von Materialien mit direktional gerichteter Mikrostruktur Verwendung finden.

Zum induktiven Heizen kann beispielsweise eine sog. "Hot Box" zum Einsatz kommen. Unter einer "Hot Box" ist im wesentlichen eine Vorrichtung mit einer Aufnahme zum Aufnehmen des zu reparierenden Bauteils sowie einer beweglich in der Aufnahme angeordnete Induktionsspule zum lokalen Erwärmen des Bauteils zu verstehen. Die Aufnahme kann während des Lötprozesses mit einem Inertgas, beispielsweise Argon, geflutet werden.

In einer Weiterbildung des erfindungsgemäßen Reparaturverfahrens kann eine Wärmebehandlung des Basismaterials in den Prozess des Verlötens des Lotes integriert sein. Dadurch lässt sich gleichzeitig mit dem Reparieren ein Wiederaufbereiten (Rejuvenation) der Basismaterialeigenschaften realisieren.

Ein erfindungsgemäßes Bauteil umfasst ein Basismaterial, welches eine gerichtete Mikrostruktur aufweist, und mindestens eine Reparaturstelle, an der ein Reparaturmaterial mit dem Basismaterial verbunden ist, wobei das Reparaturmaterial dieselbe gerichtete Mikrostruktur aufweist wie das Basismaterial. Es zeichnet sich dadurch aus, dass sich die Reparaturstelle in einem strukturell tragenden Bereich des Bauteils befindet. Das Bauteil kann insbesondere als Turbinenbauteil, beispielsweise als Turbinenschaufel, ausgestaltet sein.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Zeichnungen.
- Fig. 1a - 1c: zeigen ein Ausführungsbeispiel für das erfindungsgemäße Reparaturverfahren.
- Fig. 2: zeigt eine Abwandlung des Ausführungsbeispiels.

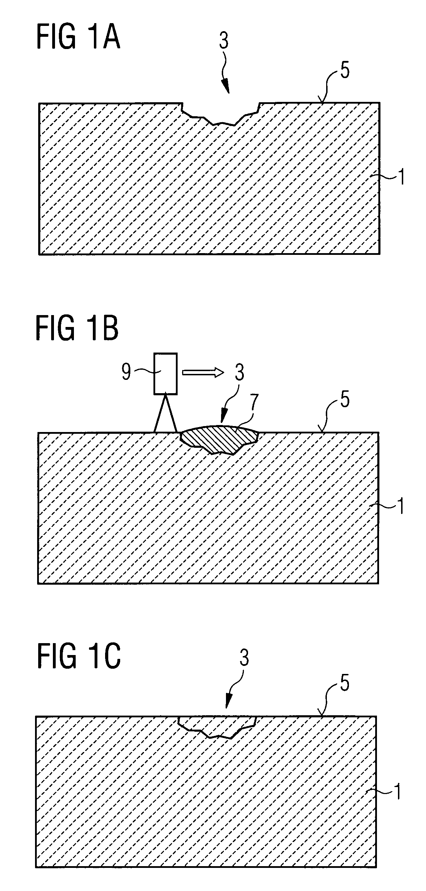

In Figur 1a ist in schematischer Ansicht ein beschädigtes Bauteil 1 dargestellt.

Das Basismaterial des Bauteils 1 umfasst eine Legierung auf Nickelbasis und weist eine gerichtete Mikrostruktur, die in den Figuren durch kurze waagrechte Striche angedeutet ist, auf. Die Beschädigung 3 des Bauteils 1 befindet sich im Bereich der Oberfläche 5 und ist in der Figur als Vertiefung dargestellt.

Zum Reparieren des geschädigten Bauteils 1 wird ein Lot 7, das im vorliegenden Ausführungsbeispiel in Pulverform vorliegt, auf die die vorgereinigte beschädigte Stelle 3 aufgebracht und anschließend mittels Wärmeeinwirkung mit dem Basismaterial des Bauteils 1 verlötet (Fig. 1b).
Insbesondere wird das gesamte benötigte Lot 7 in die vorgereinigte beschädigte Stelle 3 ggf. mit einem kleinen Überschuss eingebracht und insbesondere nicht während des Aufschmelzens schrittweise hinzugeführt.
Dabei ist es vorteilhaft, wenn die Materialzusammensetzung des Lotes der des Bauteils ähnlich ist. Insbesondere muss das Lot 7 jedoch einen Bestandteil umfassen, dessen Schmelztemperatur niedriger ist, als die Schmelztemperatur des Basismaterials des Bauteils 1, damit mittels der Wärmeeinwirkung ein Aufschmelzen des Lotes 7, nicht jedoch des Basismaterials des Bauteils 1 erfolgt.

Um die Wärmeeinwirkung auf das Lot 7 zu verwirklichen, ist im vorliegenden Ausführungsbeispiel ein Laser 9 vorhanden, welcher das aufzuschmelzende Lot bestrahlt und ihm so die zum Schmelzen nötige Wärme zuführt.

Erfindungsgemäß wird während des Lötvorgangs ein Temperaturgradient im Bereich der Beschädigung 3 hergestellt. Das Herstellen des Temperaturgradienten kann dabei erfolgen, indem das Bauteil 1 und der Laser 9 relativ zueinander bewegt werden. Im Ausführungsbeispiel wird daher der Laser parallel zur Oberfläche 5 über das Lot 7 geführt. Die Geschwindigkeit, mit der das Führen des Lasers 9 über das Lot 7 erfolgt, ist dabei derart gewählt, dass sich der gewünschte Temperaturgradient im Bereich der Beschädigung 3, d.h. im Lot 7, einstellt. Der Temperaturgradient induziert dabei das Entstehen einer epitaktisch gerichteten Mikrostruktur, wenn das durch den Laser 9 aufgeschmolzene Lot 7 wieder erstarrt. Die Steilheit des Temperaturgradienten kann dabei beispielsweise durch die Geschwindigkeit, mit der Laser 9 und Bauteil 1 relativ zueinander beweglich werden, oder die Laserleistung eingestellt werden. Unter der Steilheit des Gradienten ist hierbei die Zuoder Abnahme der Temperatur pro Längeneinheit zu verstehen. Die Steilheit des Temperaturgradienten, die zum Entstehen einer gerichteten Mikrostruktur im sich verfestigenden Lot führt, hängt dabei von der Zusammensetzung des Lotes ab.

Im vorliegenden Ausführungsbeispiel erstreckt sich die Vorzugsrichtung der gerichteten Mikrostruktur im Basismaterial des Bauteils 1 innerhalb der Zeichenebene von links nach rechts. Um im erstarrenden Lot 7 das Entstehen einer gerichteten Mikrostruktur zu induzieren, deren Vorzugsrichtung mit der im Basismaterial übereinstimmt, erfolgt die Bewegung des Lasers 9 relativ zum Bauteil 1 parallel zur Vorzugsrichtung der gerichteten Mikrostruktur des Basismaterials.

Figur 1c zeigt das Bauteil 1 nach dem Reparieren der Beschädigung 3. Wie durch die waagrechten Striche im Bereich des nun verfestigten Lots 7 angedeutet ist, weist das verfestigte Lot 7, also das Reparaturmaterial, eine gerichtete Mikrostruktur auf, welche dieselbe Vorzugsrichtung wie die gerichtete Mikrostruktur des Basismaterials des Bauteils 1 besitzt.

Ebenso kann der Laser 9 mit seinen Laserstrahlen so aufgeweitet sein, dass er beispielsweise das gesamte Lot bestrahlt aber jedenfalls dadurch ganz erwärmt.
Ein Verfahren des Lasers ist also nicht unbedingt notwendig. Durch die Abfuhr Wärme des Lots 7 in das Substrat des Bauteils 1 entsteht innerhalb des Lots 7 ein Temperaturgradient. An der äußeren Oberfläche des Lots 7 ist die Temperatur am höchsten und an der Grenzfläche des Lots 7 zu dem Substrat des Bauteils 1 hin ist es kälter. Ggf. kann das Bauteil 1 auf der Rückseite, der Beschädigung 3 gegenüber oder irgendwo sonst gekühlt oder erwärmt werden, um einen gewünschten bestimmten Temperaturgradienten einzustellen.

Im vorliegenden Ausführungsbeispiel wurde zum Zuführen der Wärme ein Laser 9 verwendet. Alternativ ist jedoch auch die Verwendung anderer optischer Heizmethoden, beispielsweise das Beleuchten mit einer konventionellen Beleuchtungsvorrichtung, möglich. Außerdem ist es auch möglich, statt optischer Heizmethoden induktive Heizmethoden zu verwenden, in denen das Lot mittels Heizspulen geheizt wird. Schließlich besteht auch die Möglichkeit, spezielle Heizöfen, wie etwa eine sog. "Hot Box" oder einen Gießofen zum Herstellen eines Gussteils mit direktional gerichteter Mikrostruktur zu verwenden. Auf jeden Fall muss das verwendete Verfahren geeignet sein, einen Temperaturgradienten im Bereich der Beschädigung bzw. der mit Lot verfüllten Beschädigung zu erzeugen. Bei Verwendung eines Ofens kann dies beispielsweise durch einen stationären Ofen erfolgen, der es ermöglicht, die Heizwirkung in verschiedenen Bereichen des Ofens getrennt einzustellen.

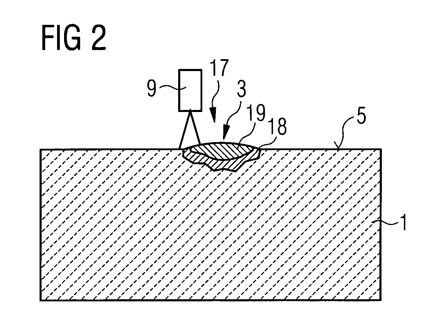

Eine Abwandlung des mit Bezug auf die Figuren 1a bis 1c dargestellten Ausführungsbeispiels ist in Figur 2 dargestellt. Im der Abwandlung des Ausführungsbeispiels umfasst das auf die beschädigte Stelle 3 aufgetragene Lot 17 zwei Bestandteile, von denen der erste Bestandteil eine Schmelztemperatur aufweist, die deutlich niedriger ist, als die des Basismaterials des Bauteils 1. Der zweite Bestandteil weist hingegen eine Schmelztemperatur auf, die im Bereich zwischen der Schmelztemperatur des ersten Bestandteils und der Schmelztemperatur des Basismaterials liegt. Außerdem weist der zweite Bestandteil insbesondere auch eine hohe Festigkeit im Bereich des Basismaterials auf.

Das Auftragen des pulverförmigen Lots 17 auf die vorgereinigte beschädigte Stelle 3 erfolgt derart, dass zuerst eine Lotzusammensetzung 18 aufgetragen wird, in welcher der erste Bestandteil einen relativ hohen Anteil am Pulver ausmacht. Anschließend wird eine Lotzusammensetzung 19 aufgetragen, in der der erste Bestandteil gegenüber dem zweiten Bestandteil verringert ist. Wenn nun ein Verlöten des Lots 17 mit dem Basismaterial erfolgt, erleichtert der hohe Anteil des ersten Bestandteils, also des Bestandteils mit der niedrigen Schmelztemperatur, ein einfaches Verlöten des Lots mit dem Basismaterial, wohingegen die Lotzusammensetzung 19, in dem der Anteil des ersten Bestandteils verringert ist, eine höhere Festigkeit der reparierten Stelle gewährleistet.

Ebenso ist es möglich, dass die Lotzusammensetzung 18 eine höhere Festigkeit der zu reparierenden Stelle 3 gewährleistet und die oberflächennähere Lotzusammensetzung 19 einen höheren Oxidations- und/oder Korrosionsschutz aufweist.
Statt diesem zweischichtigen Aufbau des Lots 7 kann das Lot 7 in der zu reparierenden Stelle 3 einen Gradienten von der Spitze der Stelle 3 bis zur Oberfläche 5 des Bauteils aufweisen, in dem sich die Zusammensetzung des Lots 7 kontinuierlich verändert, also einen Gradienten aufweist.

In beiden Ausführungsvarianten des erfindungsgemäßen Verfahren ist es auch möglich, die Wärmeeinwirkung zum Verlöten des Lotes 7, 17 mit dem Basismaterial des Bauteils 1 gleichzeitig zum Durchführen einer Wärmebehandlung des Basismaterials zu verwenden, umso eine Wiederaufbereitung (Rejuvenation) der Basismaterialeigenschaften zu ermöglichen.

Im beschriebenen Ausführungsbeispiel und seiner Abwandlung wird das Lot in Pulverform auf die zu reparierende Stelle aufgetragen. Alternativ kann es jedoch auch als Folie oder Paste aufgetragen werden.

## Patentansprüche

1. Reparaturverfahren zum Reparieren eines Bauteils (1), welches ein Basismaterial mit einer gerichteten Mikrostruktur umfasst, derart, dass die reparierte Stelle (3) dieselbe gerichtete Mikrostruktur wie das umgebende Basismaterial aufweist, bei dem ein Lot (7, 17) im Bereich einer zu reparierenden Stelle (3) aufgebracht wird und mittels Wärmeeinwirkung mit dem Bauteil (1) verlötet wird, wobei während der Wärmeeinwirkung ein Temperaturgradient im Bereich der zu reparierenden Stelle erzeugt wird.

2. Reparaturverfahren nach Anspruch 1,
**dadurch gekennzeichnet, dass**
der Temperaturgradient derart ausgerichtet ist, dass er in Richtung der Orientierung der gerichteten Mikrostruktur des Basismaterials des Bauteils (1) verläuft.

3. Reparaturverfahren nach Anspruch 1 oder Anspruch 2,
**dadurch gekennzeichnet, dass**
das Lot (17) einen ersten Bestandteil mit einer Schmelztemperatur, die niedriger ist, als die Schmelztemperatur des Basismaterials des Bauteils (1), und einen zweiten Bestandteil mit einer hohen Widerstandsfähigkeit und einer Schmelztemperatur, die über der Schmelztemperatur des ersten Bestandteils aber unterhalb der Schmelztemperatur des Basismaterials bis hin zur Schmelztemperatur des Basismaterials liegt, umfasst und dass das Lot (17) derart im Bereich der zu lötenden Stelle aufgebracht wird, dass der Anteil an erstem Bestandteil im Lot (17) in der Nähe (18) des Basismaterials höher ist, als in einem vom Basismaterial weiter entfernten Bereich (19).

4. Reparaturverfahren nach einem der Ansprüche 1 bis 3,
bei dem der Temperaturgradient mittels eines optischen Heizvorgangs hergestellt wird.

5. Reparaturverfahren nach einem der Ansprüche 1 bis 3,
bei dem der Temperaturgradient mittels eines induktiven Heizvorgangs hergestellt wird.

6. Reparaturverfahren nach einem der Ansprüche 1 bis 3,
bei dem der Temperaturgradient mittels eines Gießofens zum Herstellen eines Gussteils mit direktional gerichteter Mikrostruktur hergestellt wird.

7. Reparaturverfahren nach Anspruch 5,
bei dem der Temperaturgradient mittels einer Hot Box hergestellt wird.

8. Reparaturverfahren nach einem der Ansprüche 1 bis 7,
bei dem eine Wärmebehandlung des Basismaterials in den Prozess des Verlötens des Lotes (7, 17) integriert ist.

9. Bauteil(1) mit einem Basismaterial,
welches eine gerichtete Mikrostruktur aufweist, und mindestens einer Reparaturstelle (3), an der ein Reparaturmaterial (7, 17) mit dem Basismaterial verbunden ist, wobei das Reparaturmaterial (7, 17) dieselbe gerichtete Mikrostruktur aufweist wie das Basismaterial,
**dadurch gekennzeichnet, dass**
sich die Reparaturstelle (3) in einem strukturell tragenden Bereich des Bauteils (1) befindet.

10. Bauteil nach Anspruch 9,
**dadurch gekennzeichnet, dass**
es als Turbinenbauteil ausgestaltet ist.
